# EUROPÄISCHE PATENTANMELDUNG

(11) **EP 3 444 997 A1**
(43) Veröffentlichungstag der Anmeldung: **20.02.2019**
(21) Anmeldenummer: 17186826.8
(22) Anmeldetag: 18.08.2017
(51) Int. Cl.: H04L 9/32, H04L 29/08, G06F 17/30

(54) **VORRICHTUNGEN ZUM BEREITSTELLEN EINER MENGE VON KRYPTOGRAPHISCH GESCHÜTZTEN UND GEFILTERTEN SOWIE SORTIERTEN TRANSAKTIONSDATENSÄTZEN EINES GLIEDES EINER BLOCKKETTE**

(71) Anmelder: Siemens Aktiengesellschaft, 80333 München (DE)
(72) Erfinder: Falk, Rainer, 85586 Poing (DE)

(57) **Zusammenfassung**

Die Erfindung bezieht sich auf Vorrichtungen zum Bereitstellen einer Menge von kryptographisch geschützten und gefilterten sowie sortierten Transaktionsdatensätzen eines Gliedes einer Blockkette sowie ein Verfahren zum Bilden einer Menge der sortierten Transaktionsdatensätzen.

Ein Aspekt der Erfindung ist eine Vorrichtung zum Bereitstellen einer Menge von kryptographisch geschützten und gefilterten Transaktionsdatensätzen aus einer Menge von auf Integrität geprüften und semantisch sortierten Transaktionsdatensätzen (Tx2, Tx1, Tx0, Tx3) eines Gliedes (B10, B11) einer Blockkette, welches insbesondere nach dem erfindungsgemäßen Verfahren gebildet ist, aufweisend:
- Bereitstellungsmittel zum Bereitstellen zumindest eines solchen Gliedes einer Blockkette und
- Kopplungsmittel zur Kopplung der Bereitstellungsmittel mit einer Filterungseinrichtung, welche die Menge von gefilterten Transaktionsdatensätzen aus der Menge der geprüften und semantisch sortierten Transaktionsdatensätzen der Blockkette mit Hilfe eines Filterkriteriums ermittelt, und
- Ausgabemittel zum Bereitstellen der ermittelten Menge von gefilterten Transaktionsdatensätzen.

## Beschreibung

Die Erfindung bezieht auf Vorrichtungen zum Bereitstellen einer Menge von kryptographisch geschützten und gefilterten sowie sortierten Transaktionsdatensätzen eines Gliedes einer Blockkette sowie ein Verfahren zum Bilden einer Menge der sortierten Transaktionsdatensätzen und eine dazugehörige Kommunikationsnetzanordnung und ein dazugehöriges Computerprogrammprodukt.

### Hintergrund

werden. Dadurch ist in der Blockchain eine große Anzahl von Transaktionen unterschiedlicher Art enthalten. Wenn eine Blockchain für industrielle Anwendungen z.B. zur Steuerung eines Smart Energy Grids (intelligentes Energienetz), verwendet wird, müssen Knoten des Netzes eine Vielzahl von für sie nicht relevanten Transkationen bearbeiten.

Die Technologie von Blockketten (engl. Blockchains bzw. Block Chains) bzw. "Distributed Ledgers" ist aktuell ein intensiv diskutierte Technologie. Sie wird unter anderem in https://en.wikipedia.org/wiki/Blockchain (database) beschrieben.

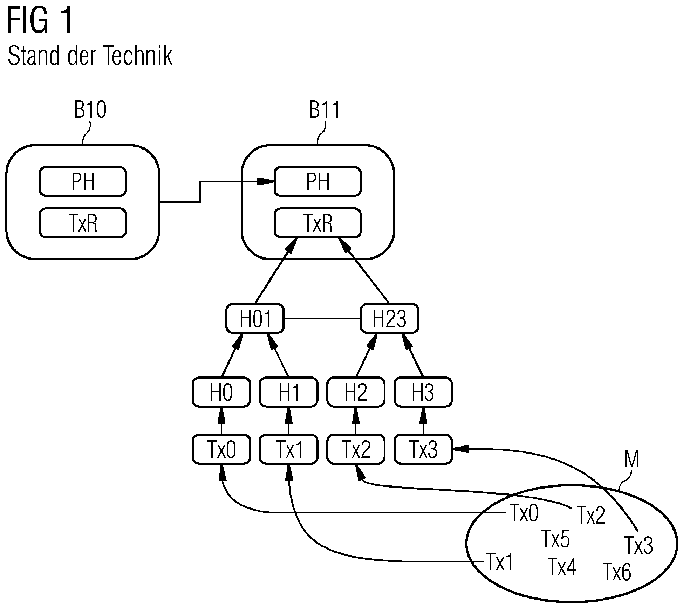

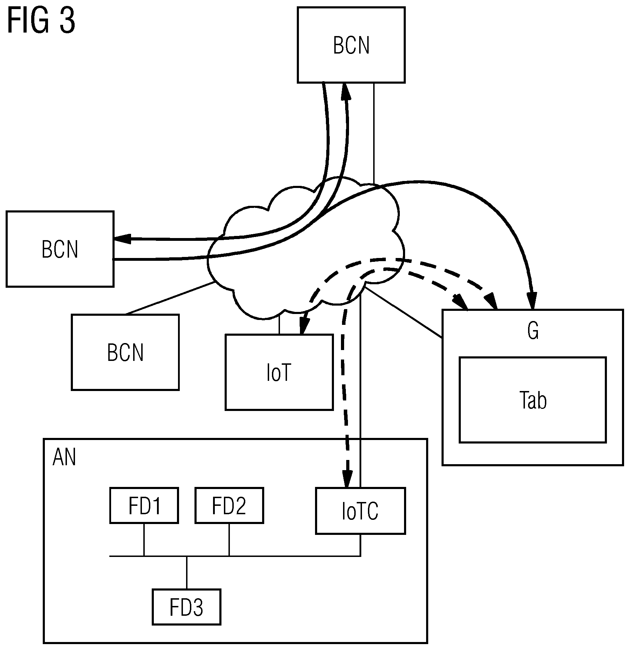

Figur 1 zeigt ein Beispiel für eine solche Blockkette. Unter einer Blockkette bzw. Blockchain wird im allgemeinen eine Datenbank verstanden, deren Integrität (Sicherung gegen nachträgliche Manipulation) durch Speicherung des Einwegfunktionswertes PH, auch Hashwert genannt, des vorangehenden Datensatzes bzw. Blocks bzw. Glieds B10 im jeweils nachfolgenden Glieds B11, also durch kryptographische Verkettung, gesichert ist. Der Schutz entsteht durch eine Mehrheit von vertrauenswürdigen, beispielhaft in Figur 3 dargestellten Knoten BCN in einem Blockchain-Netzwerk N, welche ein sogenanntes Mining oder Validieren von Blöcken durchführt. Im Netz der an einer Blockchain teilnehmenden Knoten wird in regelmäßigen Abständen, beispielsweise alle 10 Minuten, ein neuer Block z.B. B11 gebildet und dabei der Hashwert PH eines bestehenden Blockes mit hinterlegt. Dabei wird aus einer Menge M von Transaktionen z.B. Tx0, Tx1, Tx2, Tx3, Tx4, Tx5 und Tx6 eine vorgebbare Anzahl, im Beispiel 4, an Transaktionen z.B. Tx0, Tx1, Tx2 und Tx3 ausgewählt und in beliebiger, allenfalls in einer syntaktischen Reihenfolge der Nummerierung von 0 bis 3 nach in einen Hash-Baum als Blätter eingehängt. Als Hashbäume ist beispielsweise die Verwendung von Merkle Tree oder Patricia Tree üblich. Der Wurzelknoten TxR eines solchen Hashbaums ist in einem Block z.B. B11 verankert.

Einmal in der Block-Kette auftauchende Transaktionen Tx0, Tx1, Tx2, Tx3 sind nicht mehr unbemerkt veränderbar. Bei diesem Mining-Prozess wird die Gültigkeit bzw. die Integrität von im Block zu hinterlegenden Transaktionen geprüft. Mit Hilfe eines Transaktionsdatensatzes kann die Transaktion ausgeführt werden. Unter einer Transaktion wird eine gegenseitige Übertragung von virtuellen oder realen Gütern bzw. einer Zahlung (z.B. mittels Bitcoin oder Ethereum) oder anderen Informationen von einem Sender zu einem Empfänger verstanden. Bei Bitcoin wird eine relativ einfache stackbasierte Laufzeitumgebung verwendet, um die Zulässigkeit einer Transaktion zu prüfen. Eine Transaktion umfasst dabei die Prüfsumme zur Überprüfung der Gültigkeit der Transaktion. Die Blockchain-Plattform Ethereum unterstützt eine frei programmierbare Laufzeitumgebung, sodass der Programmcode einer Blockchain flexibel realisiert werden kann. Dabei wird z. B. eine Geschäftslogik als Programmcode im Transaktionsdatensatz und damit in der Blockchain oder in einem Blockchain-Infrastrukturknoten hinterlegt. So gesehen ist die auszuführende Transaktion in einem (Ketten-)Glied der Blockchain hinterlegt. Demnach ist in diesem Zusammenhang eine Unterscheidung zwischen der auszuführenden Transaktion und dem Transaktionsdatensatz, der zur Ausführung der Transaktion ausgestaltet ist, kaum möglich.

Bei Blockchains ist es möglich, dass manche Knoten einen Block vollständig validieren, d.h. alle Transaktionen eines Blocks überprüfen. Da dies aufwendig ist, sind auch "Simple Validation Nodes" denkbar, die nur einzelne Transaktionen validieren. Dazu sollten sie jeweils den Pfad durch den Hashbaum der betroffenen Transaktionen durchforsten und überprüfen.

Neben einem Mining-Prozess als "Proof of Work" sind auch Alternativen bekannt, insbesondere ein "Proof of Stake", bei dem ein Block durch einen pseudozufällig, aber deterministisch ausgewählten Blockketten-Knoten bestätigt wird, oder eine zugangskontrollierte Blockkette (permissioned Blockchain). Ein Blockchain geschützter und somit kryptographisch geschützter Transaktionsdatensatz umfasst im allgemeinen Programmcode. Unter dem Begriff "Smart Contract" wird ein Programmcode verstanden, in dem zum Erstellungszeitpunkt Bedingungen definiert und zu seiner Laufzeit ausgewertet werden können, so dass bestimmte Transaktionen in einer bestimmten (Geldbetrags-)Höhe an einen bestimmten oder mehrere bestimmte Empfänger durchgeführt werden können oder nicht.

Eine Aufgabe der vorliegenden Erfindung ist es, Verfahren und Vorrichtungen bereitzustellen, welche eine effiziente bzw. verbesserte Bearbeitung der Transaktionen durch die Knoten ermöglichen, welche für die Knoten relevant sind.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht ein Verfahren zum Bilden bzw. zum Erzeugen einer Menge von kryptographisch geschützten und semantisch sortierten Transaktionsdatensätzen einer Blockkette aus einer Menge von unsortierten Transaktionsdatensätzen, aufweisend folgende Schritte:
a) Bilden zumindest eines zweiten Gliedes einer Blockkette, welches mit einem ersten Glied derselben oder einer weiteren Blockkette verkettet worden ist oder verkettet wird,
b) Festlegen mindestens eines Suchbegriffs im zweiten Glied oder Auslesen mindestens eines zuvor festgelegten Suchbegriffs, welchen das zweite Glied umfasst,
c) Auswählen eines Transaktionsdatensatzes aus der Menge der unsortierten Transaktionsdatensätze, wobei der ausgewählte Transaktionsdatensatz auf Integrität geprüft worden ist,
d) Zuordnen des ausgewählten Transaktionsdatensatzes zu dem festgelegten oder ausgelesenen Suchbegriff oder zu einem der festgelegten oder ausgelesenen Suchbegriffe,
e) Wiederholen der Schritte b) bis d) bis eine vorgebbare Anzahl an auszuwählender Transaktionsdatensätze erreicht ist und/oder die Menge der unsortierten Transaktionsdatensätze leer ist,
f) Semantisches Sortieren der ausgewählten und zugeordneten Transaktionsdatensätze anhand eines vorgebbaren Sortierkriteriums, wobei die zugeordneten Suchbegriffe in eine dem Sortierkriterium entsprechende Reihenfolge gebracht werden, und
g) Bilden der Menge der kryptographisch geschützten und semantisch sortierten Transaktionsdatensätzen mit Hilfe der genannten Reihenfolge.

Das Verfahren ist derart wiederholbar, dass letztendlich mehrerer Glieder beginnend mit einem Startglied, das auch das Ursprungsglied (Genesis-Glied) sein kann, gebildet bzw. erzeugt werden können, wobei jedes Glied für sich eine Überprüfungsfunktion der eingangs genannten Art oder Teilfunktionen davon entsprechend enthalten kann.

Unter semantisch sortiert wird im Zusammenhang mit der Erfindung verstanden, dass die Sortierung von der Bedeutung eines Suchbegriffes abhängt. Dabei kann die semantische Sortierung rein zufällig die gleiche Reihenfolge wie in der eingangs genannten syntaktischen Sortierung in der Anordnung der genannten Transaktionen ergeben. Dies ist jedoch in der Regel nicht der Fall. Die Reihenfolge der angeordneten Transaktionen fällt normalerweise semantisch anders als syntaktisch oder gar als unsortiert aus.

Ein Suchbegriff kann hierbei aus einem Oberbegriff und einen oder mehreren weiteren untergeordneten Untergriffen zusammengesetzt sein. Zwischen den Ober- und Unterbegriffe kann jeweils ein Trennzeichen z.B. "." eingefügt sein.

Bei mehreren festgelegten oder ausgelesenen Suchbegriffen in dem genannten zweiten Glied können diese in einem Suchbaum, vorzugsweise einem Hashbaum, angeordnet werden, wobei die Suchbegriffe die Knoten des Suchbaums bilden. Ein Suchbegriff kann auch hierarchisch mit dem Oberbegriff im Wurzelknoten des Suchbaums bis zu einem am weitetesten untergeordneten Unterbegriff im Blattknoten des Suchbaums angeordnet werden, wobei gegebenenfalls ein Trennzeichen eine zwischen den zugehörigen Knoten liegende Kante des Suchbaums kennzeichnet.

Der Suchbaums eines Glieds ist somit anhand von Suchbegriffen strukturiert.

Das Verfahren wird vorzugsweise rechnergestützt durchgeführt. Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, der Mittel oder anderer Aspekte und/oder Teilaspekte der Erfindung realisiert.

Unter einer "Speichereinheit" kann im Zusammenhang mit der Erfindung beispielsweise ein Speicher in Form von ArbeitsSpeicher (engl. Random-Access Memory, RAM) oder eine Festplatte verstanden werden.

Unter Mittel kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Eine Blockchain kann effizienter durch Knoten, insbesondere Steuerrechner bzw. -geräte in einem Industriellen IoT-Umfeld (Internet of Things), verwendet werden. Außerdem wird das Echtzeitverhalten verbessert, da weniger nicht relevante Information von diesen Knoten inhaltlich ausgewertet werden muss. Dennoch kann eine gemeinsame Blockchain-Plattform für eine Vielzahl von unterschiedlichen Aufgaben verwendet werden, wodurch eine solche Blockchain-Plattform effizient betreibbar ist. Weiterhin kann die Blockketten-Plattform auf unterschiedlichen Hardware-Plattformen ausgeführt werden.

Ein weiterer Aspekt der Erfindung ist eine Vorrichtung zum Bereitstellen einer Menge von kryptographisch geschützten und gefilterten Transaktionsdatensätzen aus einer Menge von auf Integrität geprüften und semantisch sortierten Transaktionsdatensätzen eines Gliedes einer Blockkette, welches nach dem Verfahren nach einem der vorhergehenden Verfahrensansprüche gebildet ist, aufweisend:
- Bereitstellungsmittel zum Bereitstellen zumindest eines solchen Gliedes einer Blockkette und
- Kopplungsmittel zur Kopplung der Bereitstellungsmittel mit einer Filterungseinrichtung, welche die Menge von gefilterten Transaktionsdatensätzen aus der Menge der geprüften und semantisch sortierten Transaktionsdatensätzen der Blockkette mit Hilfe eines Filterkriteriums ermittelt, und
- Ausgabemittel zum Bereitstellen der ermittelten Menge von gefilterten Transaktionsdatensätzen.

Unter "Bereitstellen" kann im Zusammenhang mit der Erfindung beispielsweise ein Erstellen, Laden oder ein Speichern, des Transaktionsdatensatzes auf oder von einem Datenträger bzw. Plattform verstanden werden.

Mit Hilfe des Filterkriteriums wird eine einfache Filterung der relevanten Transaktionen eines Blockchain-Blocks ermöglicht. Das Filterkriterium kann derart organisiert sein, dass ein Knoten somit nicht den ganzen Suchbaum mit allen Transaktionen bearbeiten, sondern gezielt einen Teilbaum ermitteln kann, der die für ihn relevanten Transaktionen enthält.

Das Filterkriterium als eine Art "Publish-Subscibe"-Kriterium ausgebildet sein. Es sind Publish-Subscribe-Protokolle, z.B. MQTT, XMPP, OPC UA PubSub, einsetzbar. Dabei publizieren sogenannte Publisher-Knoten Nachrichten, Subscriber, z.B. Geräte einer Gruppe empfangen Nachrichten. Suchbegriffe identifizieren Themen von Nachrichten. Ein Publisher (Veröffentlichungsknoten) gibt das Thema (Topic bzw. Suchbegriff) einer Nachricht an, Subscriber abonnieren die Nachrichten bestimmter Themen. Die Nachrichten werden beispielsweise durch einen Message Broker vermittelt. Die Suchbegriffe sind dabei allgemein hierarchisch beispielsweise mit der oben genannten Suchbaum-Ausführungsform strukturiert.

Ein weiterer Aspekt der Erfindung ist eine Filterungseinrichtung geeignet zur Kopplung mit den Bereitstellungsmitteln der vorgenannten Vorrichtung, gekennzeichnet durch Ermittlungsmittel zum Ermitteln einer Menge von gefilterten Transaktionsdatensätzen aus der Menge der auf Integrität geprüften und sortierten Transaktionsdatensätzen einer Blockkette mit Hilfe des Filterkriteriums.

Eine Ausführungsform der Filterungseinrichtung sieht vor, dass das Filterkriterium mit Hilfe eines weiteren Suchbegriffs und/oder zumindest eines Teils des weiteren Suchbegriffes festlegbar ist, welcher mit dem Suchbegriff in dem bereitgestellten Glied der Blockkette identisch ist oder von diesem ableitbar ist oder abgeleitet ist. Der weitere Suchbegriff kann ein Topic der oben bereits erläuterten Art (Publish-Subscribe) sein, welcher einem Suchbegriff im Suchbaum zugeordnet oder ggf. mit diesem identisch ist. Die Zuordnung bzw. Ableitung kann dann mittels einer Zuordnungstabelle (Suchbegriff - Topic) durchgeführt werden.

Ein weitere Aspekt der Erfindung ist eine Zugangseinheit umfassend eine Filterungseinrichtung der oben genannten Art, dadurch gekennzeichnet, dass der weitere Suchbegriff von einem Gerät oder mehreren Geräten einer Gruppe festlegbar und/oder insofern abonnierbar ist, dass die dem Suchbegriff zugeordneten Transaktionsdatensätze von diesen abonniert werden, und nur die Glieder der Blockkette an das Gerät oder die mehreren Geräte weitergereicht werden, welche die festgelegten und/oder abonnierten Transaktionsdatensätze aufweisen. Somit ist die Zugangseinheit eine Art Gateway insbesondere für die Geräte, vorzugsweise für IoT-Geräte (welche oft keine Blockketten verarbeiten können). Über eine Benutzerschnittstelle (UI) können die weiteren Suchbegriffe bzw. Topics festgelegt werden. Die Suchgebegriffe können auch als Projektierungsdaten für eine industrielle Anlage vorgebeben sein. Dann kann das Gerät bestimmte weitere Suchbegriffe abonnieren. Die Transaktionen, die zu dem weiteren Suchbegriff passen, werden gefiltert und nur diese für das genannte Gerät ausgeführt oder dem Gerät zur Verfügung gestellt.

Ein weiterer Aspekt der Erfindung ist eine Kommunikationsnetzanordnung umfassend folgende Komponenten:
- zumindest einen eine Blockketten verarbeitenden Netz-Knoten, welcher jeweils eine Vorrichtung der oben genannten Art aufweist,
- ein oder mehrere Geräte, die einer Gruppe zugeordnet sind,
- wenigstens eine Filterungseinrichtung der oben genannten Art oder wenigstens eine Zugangseinheit nach der oben genannten Art, und
- umfassend eine Netzwerkinfrastruktur, mit Hilfe derer die genannten Komponenten miteinander kommunizieren können.

In der Netzwerkinfrastruktur kann ein Publish-Subscribe-Protokoll beispielsweise der bereits oben erläuterten Art angewendet werden, bei dem die Filterungseinrichtung dazu ausgelegt ist, dem einen oder mehreren Geräten der Gruppe das Abonnieren und/oder Festlegen von Suchbegriffen zu ermöglichen.

Die Netzwerkinfrastruktur kann so ausgebildet sein, dass die genannten Komponenten drahtgebunden oder drahtlos über eine Luftschnittstelle miteinander kommunizieren können. Die Luftschnittstelle kann gemäß des Standards GSM, UMT, LTE, 5G, WLAN, Zigbee, Bluetooth bzw. NFC etc. ausgebildet sein.

Die Vorrichtungen, Einrichtungen bzw. Anordnungen können entsprechend der Weiterbildungen und Ausführungsformen des oben genannten Verfahrens weitergebildet werden.

Des Weiteren wird Computerprogramm(-produkt) mit Programmbefehlen für einen eine Blockkette verarbeitenden Netz-Knoten, insbesondere der eingangs genannten Art, der mittels der Programmbefehle konfiguriert wird, die zum Ausführen des Verfahrens nach einem der vorangehenden Verfahrensansprüche geeignet sind.

Zusätzlich kann eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, vorgesehen sein.

Die Verwendungen, Vorrichtungen und Computerprogramm(-produkte) können entsprechend der Weiterbildungen/Ausführungsformen des oben genannten Verfahrens und dessen Weiterbildungen/Ausführungsformen ausgebildet sein.

Darüber hinaus ist eine Bereitstellungsvorrichtung zum Speichern und/oder Bereitstellen des Computerprogrammprodukts möglich. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert ist, dass diese das Glied und/oder die Blockkette erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
Fig. 1 ein Ausführungsbeispiel als Blockkette gemäß des Standes der Technik;
Fig. 2 ein erfindungsgemäßes Ausführungsbeispiel eines oder mehrere in ein Glied einer Blockkette eingebunden Transaktionsdatensatzes/Transaktionsdatensätze;
Fig. 3 ein Ausführungsbeispiel, wie die Erfindung in eine Netzwerkinfrastruktur eingebettet sein kann,
Fig. 4 ein Ablaufdiagramm zum erfindungsgemäßen Verfahren.

In den Figuren sind funktionsgleiche Elemente mit denselben Bezugszeichen versehen, sofern nichts anderes angegeben ist.

Wie eingangs schon beschrieben, zeigt die Fig. 1 die Glieder, beispielsweise ein erstes Glied B10, ein zweites Glied B11 einer Blockkette. Die Glieder umfassen jeweils mehrere Transaktionen Tx0 bis Tx3. Der Hash-Wert PH, der abhängig vom Vorgänger-Glied gebildet wird, kann insbesondere ein kryptographischer Hash-Wert sein, der z.B. mittels SHA2-256, SHA2-384, SHA-3, BLAKE2 bestimmbar ist.

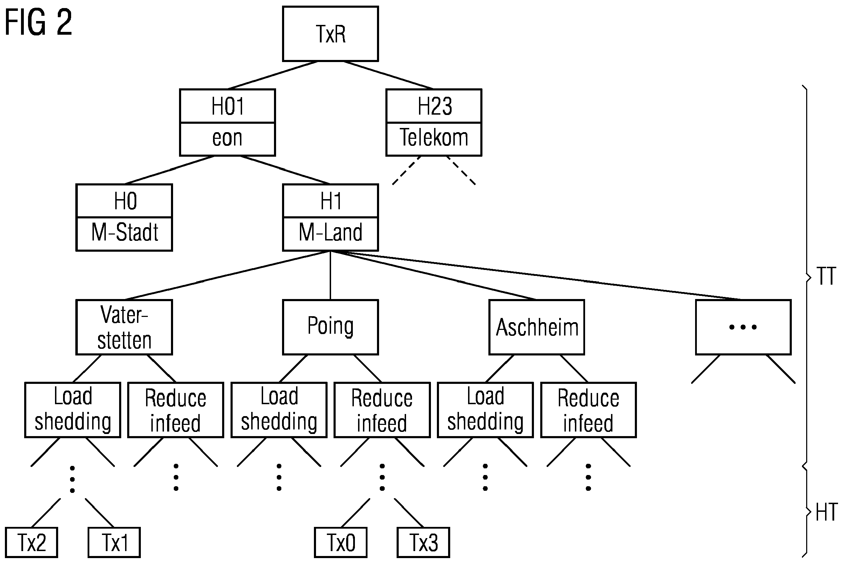

Die Fig. 2 zeigt ein Ausführungsbeispiel eines oder mehrerer in ein Glied einer Blockkette eingebunden Transaktionsdatensatzes/Transaktionsdatensätze.

Die Glieder können jeweils zu ihren Transaktionen T einen Hash(funktions)-Wert umfassen, der als Wurzelhashwert TxR eines Hashbaums TT dienen kann. Der Hashbaum, auch Suchbaum genannt, ist derart ausgebildet, dass er sowohl einen Hashwert z.B. H01, H23 zum nächsten Knoten mit den Hashwerten H0 und H1 des Hashbaums TT als auch mindestens einen Suchbegriff - wie in der Figur 2 gezeigt - "eon" oder "Telekom". Der Knoten mit H0 weist den Suchbegriff "M-Stadt" und der Knoten mit H1 den Suchbegriff z.B. als ein Oberbegriff "M-Land" auf. Es sind weitere Knoten von dem Knoten mit H1 ausgehend abgebildet, die Unterbegriffe wie z.B. Orte "Vaterstetten", "Poing" bzw. "Aschheim" aufweisen. Auch diese Knoten enthalten jeweils einen Hashwert, der in der Fig.2 nicht dargestellt ist. An den Blättern des Hashbaums TT sind mögliche Transaktionsbezeichnungen - wie in Figur 2 dargestellt - "Load shedding" (Lastabwurf), "Reduce infeed" (Verringere Einspeisung) vorgesehen, die quasi die Wurzel eines folgenden Hashbaums HT, im Beispiel als Merkle-Tree ausgebildet, darstellen. Die weiteren Knoten des Merkle-Tree sind in Figur 2 nicht dargestellt. Es werden an den Blättern des Merkle-Tree die Transaktionen Tx2, Tx1 und Tx0, Tx3 gezeigt, die im Merkle-Tree durch semantisches Sortieren aus einer unsortierten Menge M (siehe Fig.1) von Transaktionen an die dort gezeigten Positionen gelangt sind. Mit anderen Worten ausgedrückt, wird der Hashbaum HT (z.B. Merkle Tree, Patricia Tree o.ä.) eines Glieds sortiert, d.h. die Transaktionen eines Glieds werden sortiert. Dadurch befinden sich alle Transaktionen, die ein gemeinsames Sortierkriterium (Suchbegriff) erfüllen, in einem Ast des Baums.

Dies hat den Vorteil, dass die Transaktionen eines "Suchbegriffs" effizient überprüfbar sind. Ein Knoten BCN (siehe Figur 3) kann den Teilbereich des Baums HT laden und prüfen, der die Transaktionen dieses Suchbegriffs umfasst. Dadurch können unterschiedliche Arten von Transaktionen einfach unterschieden werden. Ein Knoten, der nur bestimmte Arten von Transaktionen auswerten möchte, kann gezielt den oder diejenigen Teile des Baums HT bearbeiten, in denen relevante Transaktionen enthalten sind.

Die Struktur des Baums HT kann fest vorgegeben sein, oder sie kann adaptiv bestimmt werden (je Block oder in größeren Zeitspannen). Weiterhin kann die Struktur des Baums HT (d.h. die Sortierung) als Transaktion in der Blockchain bekannt gemacht werden. Dadurch ist die Information einfach auswertbar und kann ggf. angepasst werden.

Auf diese Weise ist eine Auswertung der Blockchain-Transaktionen auch für Knoten IoT, z.B. im Internet of Things, effizient möglich. Die Transaktionen zu einem "Suchbegriff" sind demnach nicht beliebig im Merkle-Tree verteilt.

Nach Figur 3 ist ein Gerät z.B. IoT, das einer Gruppe AN z.B. einem Energienetz zugeordnet, welches z.B. ein Topic "eon.M-Land.Poing.Reduceinfeed" abonniert hat, dann wird für dieses Gerät nur die Transaktion Tx0 und Tx1 aus dem semantisch sortierten Merkle-Tree gefiltert und gegebenenfalls ausgeführt.

Das Topic bzw. der Suchbegriff ist im Beispiel der Figur 2 aus dem Oberbegriff "eon" und weiteren untergeordneten Unterbegriffen "M-Land" und "Poing" und letztendlich mit der Transaktionsbezeichnung "Reduceinfeed" mit einem Punkt-Trennzeichen zwischen den Begriffen zusammengesetzt. Ein solches Trennzeichen könnte im Baum TT eine Kante zwischen den Knoten "eon" und den Knoten"M-Land" kennzeichnen. Analog könnten alle Kanten des Baums TT mit Trennzeichen markiert sein.

Figur 3 zeigt beispielhaft eine Kommunikationsnetzanordnung umfassend Knoten BCN, die eine Blockkette (verteilte Datenbank) realisieren können, die über eine Netzwerkinfrastruktur N miteinander kommunizieren können, das durch die Pfeile angedeutet ist. Zudem ist das oben erwähnte Gerät IoT vorgesehen. Die Gruppe AN umfasst beispielsweise weitere Geräte FD1, FD2, FD3 sowie einen IoT-Kontroller IoTC, der mit dem Gerät IoT in Verbindung steht. Des Weiteren ist ein Gateway G in der Kommunikationsanordnung vorgesehen. Dieses kann z.B. als Server, Appliance oder als Cloud-basierter Dienst (z.B. eine spezielle App für eine Industrie-Plattform) realisiert sein. Das Gateway G erzeugt aus einer von einem Publisher bereitgestellten Message eines Publish-Subscribe-Protokoll (z.B. XMPP, MQTT, AMQP, OPC UA PubSub), die einem Topic zugeordnet ist, eine Blockchain-Transaktion, die eway in Gegenrichtung eine Transaktion, die dnet ist, und die in einem Glied bestätigt ist, der validiert ist, als PubSub-Message Abonnenten (Geräte einer Gruppe) als PubSub-Message bereitstellen, die als Topic den Suchbegriff der Blockchain-Transaktion aufweist. Vorzugsweise kann im Gateway oder auch in einem der Knoten BCN eine Vorrichtung (nicht dargestellt) implementiert sein, die mittels einer integrierten bzw. (remote) gekoppelten Filterungseinrichtung die Transaktionen filtert. Die Filterung kann mit Hilfe des oben beschriebenen Publish-Subscribe-Ansatzes geschehen. Durch das Topic (weiterer Suchbegriff) wird ein Filterkriterium bestimmt, mit Hilfe dessen die gefilterten Transaktionen bzw. Transaktionsdatensätze bereitgestellt und an Geräte z.B. IoT oder andere Knoten BCN weitergegeben werden können.

Dabei kann eine 1:1-Zuordnung des Blockchain-Suchbegriffs zu den PubSub-Topics (weitere Suchbegriffe s.o) erfolgen, d.h. die Begriffe sind identisch. Eine Zuordnung von Blockchain-Suchbegriffen zu PubSub-Topics und umgekehrt kann auch über eine Tabelle Tab, die in das Gateway G integriert sein kann, erfolgen. Dies hat den Vorteil, dass eine Blockchain-Infrastruktur einfach von IoT-Geräten bzw. Industrie-4.0-Geräten z.B. FD1, FD2 verwendet werden kann, ohne dass die Geräte selbst die Blockchain-Technologie unterstützen müssen. Sie können über PubSub-Protokolle, die im IoT-Umfeld verwendet werden können, auf Blockchains zugreifen. Ein Topic (weiterer Suchbegriff) kann von einem Gerät z.B. über eine Benutzerschnittstelle festgelegt und abonniert werden kann und/oder von einem Gerät z.B. FD3 als Projektierungsdaten (z.B. Anwendungsgebiet: Industrie 4.0, Anlage: Umspannwerk, Gerät x im Umspannwerk, Region: München Land, Betreiber: Eon etc.) vorgegeben sein. Dazu wird eine Transaktion einem Topic zugeordnet (z.B. durch ein (Sortier-)Attribut). Ein Topic kann hierbei hierarchisch strukturiert sein (Topic Tree), z.B. topicl.topic2.topic3 (siehe auch oben). Als Topic können beispielsweise Namespaces genutzt werden, um die Gruppenkommunikation für ein bestimmtes Thema entsprechend nutzen zu können. Ein Beispiel ist ein Virtuelles Kraftwerk (VPP - Virtual Power Plant) von der Fa. Eon im Bereich München-Land (M-Land), das eine separate Gruppe für die Kommunikation von Einspeisereduzierungen besitzt: VPP.eon.M-Land.Poing.reduce_infeed (siehe Fig. 2).

Das Sortierkriterium oder die Mehrzahl von Sortierattributen können explizit z.B. administrativ vorgegeben werden oder implizit abhängig der Transaktion bestimmt werden. Es kann ein Hash-Wert des Smart Contracts oder eines Teils des Smart Contracts gebildet und als Sortierkriterium verwendet werden.

der Kommunikationsanordnung (siehe Fig. 3) kann ein Knoten BCN auch als Blockchain-Orakel ausgebildet sein. Durch sogenannte Blockchain-Orakel können als vertrauenswürdig geltende Knoten Information über die reale Welt in eine Blockchain-Transaktion kodieren und somit Information aus der realen Welt für Smart Contracts der Blockchain zugänglich machen. (https://blog.ledger.co/hardware-oracles-bridging-the-real-world-to-the-blockchainca97c2fc3e6c#. 1u511vbrd).

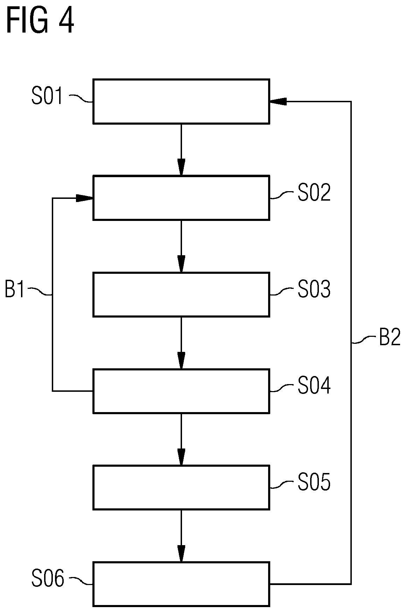

In Figur 4 ist ein Ablaufdiagramm zum erfindungsgemäßen Verfahren gezeigt. Da es sich bei einer Blockchain bzw. Blockkette um eine dezentrale, verteilte Datenbank handelt, ist normalerweise die Kommunikation mit einem der Mehrzahl von gleichartigen Blockchainknoten, in Figur 3 beispielsweise BCN, möglich.

Das Verfahren weist dabei folgende Schritte auf:
S01: Bilden eines oder mehrerer (zweiter) Gliedes/Glieder einer Blockkette, welches mit einem ersten Glied derselben oder einer weiteren Blockkette verkettet worden ist oder verkettet wird. Wie vorstehend schon erwähnt, kann es sich bei dem ersten Glied um ein Startglied und/oder Genesisglied (Ursprungsglied) handeln.
S02: Festlegen mindestens eines Suchbegriffs im zweiten Glied bzw. jedem zweiten Glied oder Auslesen mindestens eines zuvor festgelegten Suchbegriffs, welchen das zweite Glied umfasst. Die Suchbegriffe sind vorstehend bereits erläutert worden;
S03: Auswählen eines Transaktionsdatensatzes aus der Menge M (siehe z.B. Fig. 1) der unsortierten Transaktionsdatensätze, wobei der ausgewählte Transaktionsdatensatz auf Integrität geprüft worden ist; und
S04: Zuordnen des ausgewählten Transaktionsdatensatzes zu dem festgelegten oder ausgelesenen Suchbegriff oder zu einem der festgelegten oder ausgelesenen Suchbegriffe;
B1: Wiederholen der Schritte S02 bis S04 bis eine vorgebbare Anzahl an auszuwählender Transaktionsdatensätze erreicht ist und/oder die Menge der unsortierten Transaktionsdatensätze leer ist;
S05: Semantisches Sortieren der ausgewählten und zugeordneten Transaktionsdatensätze anhand eines vorgebbaren Sortierkriteriums, wobei die zugeordneten Suchbegriffe in eine dem Sortierkriterium entsprechende Reihenfolge gebracht werden, und
S06: Bilden der Menge der kryptographisch geschützten und semantisch sortierten Transaktionsdatensätzen mit Hilfe der genannten Reihenfolge.
B2: Das Verfahren wird beginnend mit S01 solange wiederholt, bis eine ausreichende Länge der Blockkette bzw. eine vorgebbare bzw. vordefinierte Anzahl an Gliedern in der Blockkette gebildet sind.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Verfahren zum Bilden einer Menge von kryptographisch geschützten und semantisch sortierten Transaktionsdatensätzen einer Blockkette aus einer Menge von unsortierten Transaktionsdatensätzen, aufweisend folgende Schritte:
a) Bilden zumindest eines zweiten Gliedes (B11) einer Blockkette, welches mit einem ersten Glied (B10) derselben oder einer weiteren Blockkette verkettet worden ist oder verkettet wird,
b) Festlegen mindestens eines Suchbegriffs im zweiten Glied oder Auslesen mindestens eines zuvor festgelegten Suchbegriffs, welchen das zweite Glied umfasst,
c) Auswählen eines Transaktionsdatensatzes (Tx0) aus der Menge (M) der unsortierten Transaktionsdatensätze (Tx0 bis Tx6), wobei der ausgewählte Transaktionsdatensatz auf Integrität geprüft worden ist,
d) Zuordnen des ausgewählten Transaktionsdatensatzes (Tx0) zu dem festgelegten oder ausgelesenen Suchbegriff oder zu einem der festgelegten oder ausgelesenen Suchbegriffe,
e) Wiederholen der Schritte b) bis d) bis eine vorgebbare Anzahl an auszuwählender Transaktionsdatensätze erreicht ist und/oder die Menge der unsortierten Transaktionsdatensätze leer ist,
f) Semantisches Sortieren der ausgewählten und zugeordneten Transaktionsdatensätze anhand eines vorgebbaren Sortierkriteriums, wobei die zugeordneten Suchbegriffe in eine dem Sortierkriterium entsprechende Reihenfolge gebracht werden, und
g) Bilden der Menge der kryptographisch geschützten und semantisch sortierten Transaktionsdatensätzen (Tx2, Tx1, Tx0, Tx3) mit Hilfe der genannten Reihenfolge.

2. Verfahren nach dem vorhergehenden Anspruch, **dadurch gekennzeichnet, dass** bei mehreren festgelegten oder ausgelesenen Suchbegriffen in dem zweiten Glied (B11) diese in einem Suchbaum (TT) angeordnet werden, wobei die Suchbegriffe die Knoten des Suchbaums bilden.

3. Verfahren nach einem der vorhergehenden Ansprüche, **dadurch gekennzeichnet, dass** ein Suchbegriff aus einem Oberbegriff und mehreren Unterbegriffen gegebenenfalls jeweils getrennt durch ein Trennzeichen zusammengesetzt wird.

4. Verfahren nach dem vorhergehenden Anspruch, **dadurch gekennzeichnet, dass** der Suchbegriff hierarchisch mit dem Oberbegriff im Wurzelknoten des Suchbaums bis zu einem am weitetesten untergeordneten Unterbegriff im Blattknoten des Suchbaums angeordnet wird und gegebenenfalls ein Trennzeichen eine zwischen den zugehörigen Knoten liegende Kante des Suchbaums kennzeichnet.

5. Vorrichtung zum Bereitstellen einer Menge von kryptographisch geschützten und gefilterten Transaktionsdatensätzen aus einer Menge von auf Integrität geprüften und semantisch sortierten Transaktionsdatensätzen (Tx2, Tx1, Tx0, Tx3) eines Gliedes (B10, B11) einer Blockkette, welches insbesondere nach dem Verfahren nach einem der vorhergehenden Verfahrensansprüche gebildet ist, aufweisend:
- Bereitstellungsmittel zum Bereitstellen zumindest eines solchen Gliedes einer Blockkette und
- Kopplungsmittel zur Kopplung der Bereitstellungsmittel mit einer Filterungseinrichtung, welche die Menge von gefilterten Transaktionsdatensätzen aus der Menge der geprüften und semantisch sortierten Transaktionsdatensätzen der Blockkette mit Hilfe eines Filterkriteriums ermittelt, und
- Ausgabemittel zum Bereitstellen der ermittelten Menge von gefilterten Transaktionsdatensätzen.

6. Filterungseinrichtung geeignet zur Kopplung mit den Bereitstellungsmitteln der Vorrichtung nach einem der vorhergehenden Ansprüche, **gekennzeichnet durch** Ermittlungsmittel zum Ermitteln einer Menge von gefilterten Transaktionsdatensätzen aus der Menge der auf Integrität geprüften und sortierten Transaktionsdatensätzen (Tx2, Tx1, Tx0, Tx3) einer Blockkette (B11) mit Hilfe des Filterkriteriums.

7. Filterungseinrichtung nach dem vorhergehenden Anspruch, **dadurch gekennzeichnet, dass** das Filterkriterium mit Hilfe eines weiteren Suchbegriffs und/oder zumindest eines Teils des weiteren Suchbegriffes festlegbar ist, welcher mit dem Suchbegriff in dem bereitgestellten Glied der Blockkette identisch ist oder von diesem ableitbar ist oder abgeleitet ist.

8. Zugangseinheit (G) umfassend eine Filterungseinrichtung nach dem vorhergehenden Anspruch, **dadurch gekennzeichnet, dass** der weitere Suchbegriff von einem Gerät (IoT) oder mehreren Geräten (IoTC, FD1, FD2, FD3) einer Gruppe (AN) festlegbar und/oder insofern abonnierbar ist, dass die dem Suchbegriff zugeordneten Transaktionsdatensätze von diesen abonniert werden, und nur die Glieder der Blockkette an das Gerät oder die mehreren Geräte weitergereicht werden, welche die festgelegten und/oder abonnierten Transaktionsdatensätze aufweisen.

9. Kommunikationsnetzanordnung umfassend folgende Komponenten:
- zumindest einen eine Blockketten verarbeitenden Netz-Knoten (BCN), welcher jeweils eine Vorrichtung nach einem der vorhergehenden Vorrichtungsansprüche aufweist,
- ein (IoT) oder mehrere Geräte (IoTC, FD1, FD2, FD3), die einer Gruppe (AN) zugeordnet sind,
- wenigstens eine Filterungseinrichtung nach einem der vorhergehenden Einrichtungsansprüche oder wenigstens eine Zugangseinheit (G) nach dem vorhergehenden Zugangseinheitsanspruch, und
- umfassend eine Netzwerkinfrastruktur (N), mit Hilfe derer die genannten Komponenten miteinander kommunizieren können.

10. Kommunikationsanordnung nach dem vorhergehenden Anspruch, **dadurch gekennzeichnet, dass** in der Netzwerkinfrastruktur (N) ein sogenanntes Publish-Subscribe-Protokoll angewendet werden kann, bei dem die Filterungseinrichtung dazu ausgelegt ist, dem einen oder mehreren Geräten der Gruppe das Abonnieren und/oder Festlegen von Suchbegriffen zu ermöglichen.

11. Computerprogrammprodukt mit Programmbefehlen für einen eine Blockkette verarbeitenden Netz-Knoten (BCN), der mittels der Programmbefehle konfiguriert wird, die zum Ausführen des Verfahrens nach einem der vorangehenden Verfahrensansprüche geeignet sind.
